**Europäisches Patentamt**

**European Patent Office**

**Office européen des brevets**

(19)

(11) Veröffentlichungsnummer: **0 003 110**
**B1**

(12) **EUROPÄISCHE PATENTSCHRIFT**

(45) Veröffentlichungstag der Patentschrift: **08.04.81**

(21) Anmeldenummer: **79100026.8**

(22) Anmeldetag: **04.01.79**

(51) Int. Cl.³: **G 05 B 19/02, B 29 C 17/07**

(54) Elektrische Steuerschaltung zum Erzeugen eines Steuersignals für die Bewegung des Dorns eines Extruders.

(30) Priorität: **05.01.78 DE 2800441**

(43) Veröffentlichungstag der Anmeldung:
**25.07.79 Patentblatt 79/15**

(45) Bekanntmachung des Hinweises auf die Patenterteilung:
**08.04.81 Patentblatt 81/14**

(84) Benannte Vertragsstaaten:
**BE CH FR GB IT NL SE**

(56) Entgegenhaltungen:
**DE - A - 2 056 497**
**DE - A - 2 445 394**
**DE - A - 2 533 077**
**US - A - 3 712 772**
**US - A - 4 011 493**

**KUNSTSTOFFE, Band 61, September 1971,**
**Mannheim,**
**HUNKAR "Schlauchwanddicken-Programmierer**
**für Hohlkörper-Blasanlagen"**
**Seite 648**

(73) Patentinhaber: **MOOG GmbH**
**Hanns-Klemm-Strasse 28**
**D-7030 Böblingen (DE)**

(72) Erfinder: **Handte, Herbert**
**Scherlachstrasse 51**
**D-7024 Filderstadt 4 (DE)**
Erfinder: **Kollmar, Friedrich**
**Krähenweg 15**
**D-7031 Grafenau 1 (DE)**

(74) Vertreter: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P. Jakob, Dr.**
**rer. nat. G. Bezold Maximilianstrasse 43**
**D-8000 München 22 (DE)**

## Elektrische Steuerschaltung zum Erzeugen eines Steuersignals für die Bewegung des Dorns eines Extruders

Die Erfindung bezieht sich auf eine elektrische Steuereinrichtung zum Erzeugen eines Steuersignals für die Bewegung des Dorns eines Extruders nach dem Oberbegriff des Hauptanspruches.

Um einen Blasformkörper herzustellen, wird in einem Extruder zuerst ein zylindrischer Vorformling gebildet, der in einem sich daran anschließenden Arbeitsgang in einer Blasform auf den gewünschten Außendurchmesser gebracht wird. Bei der Bildung des Vorformlings ist es erforderlich, der späteren Blasform in soweit schon Rechnung zu tragen, daß die Wandstärke über den hohlzylindrischen Vorformling unterschiedlich stark ausgebildet wird. Dies wird bei Extrudern dadurch erreicht, daß der in einem Werkzeugkopf angeordnete Dorn, der gegenüber dem Werkzeugkopf einen ringförmigen Spalt begrenzt, längsverschiebbar ausgebildet ist, so daß die Spaltbreite variabel ist. Um nun das gewünschte Wandstärkenprofil des Vorformlings zu erhalten, muß der Dorn nach einer bestimmten Bewegungsfunktion im Werkzeugkopf hin und her bewegt werden. In der DE-A 2 445 394 ist ein Verfahren angegeben, mit einer elektrischen Schaltung ein elektrisches Steuersignal für den Dorn zu erzeugen. Diese elektrische Steuerschaltung enthält als wesentlichen Baustein eine Widerstandsmatrix mit einer Vielzahl von Potentiometern, mit denen ein die gewünschte Steuerfunktion annähernder Polygonzug erzeugbar ist. Dabei wird von der Erkenntnis ausgegangen, daß ein Polygonzug durch die Addition von sich zeitlich überlappenden Dreiecken mit unterschiedlicher Höhe gebildet werden kann. Die Dreieckspannungen werden zu diesem Zweck den Potentiometern der Widerstandsmatrix nacheinander zugeführt, wobei an den Mittelabgriffen die jeweilige Dreieckshöhe für die Addition einstellbar ist. Die einzelnen Spannungsdreiecke werden in einzelnen Signalgeneratoren erzeugt, wobei jedem Potentiometer ein eigener Signalgenerator zugeordnet ist. Die Signalgeneratoren werden gesteuert durch ein Führungssignal, das entweder unmittelbar von einem Bewegungsteil des Extruders abgeleitet ist oder mit einer solchen zyklischen Bewegung synchronisiert ist. Nachteilig an dieser bekannten Steuereinrichtung ist es, daß für jedes Potentiometer der Widerstandsmatrix ein eigener Signalgenerator erforderlich ist. Bei einem 25-Punkte-Programmierer (eine Steuereinrichtung, mit der ein Polygon mit 25 Ecken erzeugbar ist) sind 25 solche Signalgeneratoren nötig. Da bereits ein einzelner Signalgenerator eine relativ aufwendige Baueinheit darstellt, wird die gesamte Steuereinrichtung sehr umfangreich und kostspielig. Außerdem wirken sich Toleranzen zwischen den einzelnen Signalgeneratoren nachteilig auf die Gesamtfunktion aus.

Der vorliegenden Erfindung liegt die Aufgabe zugrunde, eine Steuereinrichtung der eingangs genannten Art konstruktiv zu vereinfachen.

Diese Aufgabe wird gemäß der vorliegenden Erfindung ausgehend vom Oberbegriff des Hauptanspruches durch dessen kennzeichnende Merkmale gelöst.

Im Gegensatz zu der beschriebenen bekannten Steuereinrichtung ist bei der nunmehr angegebenen Steuereinrichtung nur noch ein einziger Signalgenerator vorgesehen, der die Signale für alle Potentiometer der Widerstandsmatrix gemeinsam erzeugt. Da in der Reihenfolge benachbarte Potentiometer mit unterschiedlichen Signalen (abfallende Flanke und aufsteigende Flanke) versorgt werden müssen, ist diesem Signalgenerator eine Komplementschaltung nachgeschaltet, die aus einer absteigenden Flanke eine aufsteigende macht, und umgekehrt. Die steuerbaren Schalter sorgen dafür, daß jeweils nur die ausgewählten zwei benachbarten Potentiometer Signal erhalten. Obwohl in dieser Steuerschaltung eine Komplementschaltung und ein Dekoder zusätzlich benötigt werden, ist die Gesamtschaltung gegenüber der bekannten wesentlich einfacher und arbeitet viel zuverlässiger.

Eine bevorzugte Ausführungsform ergibt sich aus Anspruch 2. Durch die Kettenschaltung der einzelnen Einheiten wird ein sehr einfacher Aufbau erzielt, der auch für höhere Anforderungen an die Genauigkeit der Nachbildung des Steuersignals geeignet ist. Wenn es erforderlich sein sollte, einen Polygonzug mit einer größeren Anzahl von Ecken zu erzeugen, brauchen lediglich weitere gleiche Einheiten hinzugefügt zu werden. Mit dem angegebenen Aufbau des Signalgenerators läßt sich außerdem auf sehr einfache Weise das gewünschte Ausgangssignal unmittelbar aus dem Führungssignal gewinnen.

Sehr einfache Ausführungsformen der Pegelsymmetrierschaltung und der Vollweggleichrichterschaltung sind in den Ansprüchen 3 und 4 angegeben. Die verwendeten Operationsverstärker sind zu relativ niedrigen Preisen auf dem Markt erhältlich und brauchen nur mit ganz wenigen zusätzlichen Bauelementen versehen zu werden, um die gewünschten Funktionen zu liefern.

Eine vorteilhafte Weiterbildung ist im Anspruch 5 angegeben. Da an den Ausgängen der Einheiten Impulssignale mit jeweils um den Faktor 2 abgestuften Frequenzen entstehen, lassen sich diese sehr einfach dazu verwenden, die den Potentiometern zugeordneten Schalter zu steuern.

Günstige Weiterbildungen ergeben sich weiterhin aus den Ansprüchen 6, 7 und 8. Die obige Steuereinrichtung läßt sich sehr einfach mit optischen Anzeigeelementen ergänzen, da als Steuerteil für diese Anzeigeelemente der Steuerteil für die Schalter der Potentiometer mitverwendet werden kann.

Die Ansprüche 9 und 10 bilden die obige Steuereinrichtung insofern weiter, als mit diesen Änderungen statt eines Polygonzuges ein Kurvenzug erreicht wird, der keine ausgeprägten Ecken mehr enthält, die sich unter Umständen auf den hergestellten extrudierten Körper nachteilig auswirken können.

Anhand in der Zeichnung dargestellter Ausführungsbeispiele wird die Erfindung im folgenden näher erläutert. Es zeigen:

Fig. 1 die schematische Darstellung eines Extruders,

Fig. 2 ein Blockschaltbild einer ersten Ausführungsform der erfindungsgemäßen Steuereinrichtung,

Fig. 3 ein Blockschaltbild einer erweiterten Ausführungsform einer erfindungsgemäßen Steuereinrichtung,

Fig. 4 ein Schaltbild des Signalgenerators,

Fig. 5 Spannungs-Zeit-Diagramme der im Signalgenerator auftretenden Signale A', B', C', D' und E',

Fig. 6 Spannungs-Zeit-Diagramme der im Signalgenerator auftretenden Signale A", B", C", D", E" und Ei",

Fig. 7 Spannungs-Zeit-Diagramme der im Signalgenerator auftretenden Signale A, B, C, D und E im Signalgenerator,

Fig. 8 ein Schaltbild des Dekoders,

Fig. 9 Spannungs-Zeit-Diagramme der Ausgangssignale an den Ausgängen P1—P25 des Dekoders,

Fig. 10 ein Schaltbild der Widerstandsmatrix mit angeschlossenen Schaltern und einem Summierverstärker,

Fig. 11 ein Schaltbild der Leuchtdiodenanzeige,

Fig. 12 ein Schaltbild der Pegelumsetzer I und II nach Fig. 3 mit angeschlossenem Funktionsgenerator, und

Fig. 13 ein Schaltbild des Pegelumsetzers III mit angeschlossener Inverterschaltung.

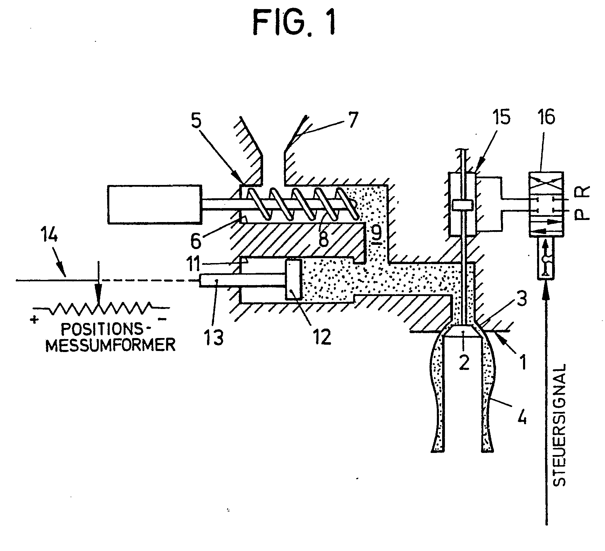

Der in Fig. 1 dargestellte Extruder enthält einen Werkzeugkopf 1 mit einem bewegbaren Dorn 2, der in dem Werkzeugkopf 1 je nach seiner axialen Stellung eine im Querschnitt veränderbare Austrittsöffnung 3 bildet, durch die ein plastifizierter extrudierbarer Werkstoff preßbar ist, um einen Vorformling 4 zu bilden. Der Vorformling 4 wird anschließend in einer nicht dargestellten Blasform zu dem gewünschten Erzeugnis, beispielsweise einer Flasche, geformt. Eine Plastifiziereinrichtung 5 ist mit einer geheizten Kammer 6 versehen, in die ein Werkstoffgranulat über einen Beschickungstrichter 7 eingebbar ist. In der Kammer 6 befindet sich eine drehbare Förderschnecke 8, die den durch Wärmeeinwirkung plastifizierten Werkstoff durch einen Kanal 9 zur Austrittsöffnung 3 befördert. Der Kanal 9 mündet in einen Zylinder 11, in dem ein Kolben 12 verschiebbar angeordnet ist. An der Kolbenstange 13 des Kolbens 12 ist ein Positionmeßumformer 14 angeordnet, der beispielsweise durch ein Potentiometer gebildet ist, mit dem die jeweilige axiale Stellung des Kolbens 12 durch ein elektrisches Signal wiedergebbar ist.

Der Dorn 2 ist durch eine Kolben-Zylinder-Anordnung 15 axial verschiebbar. Diese Kolben-Zylinder-Anordnung 15 ihrerseits wird druckbeaufschlagt von einem elektrohydraulischen Wandler 16, der durch eine elektrisches Steuersignal ansteuerbar ist. Im den Vorformling 4 über seine Länge mit dem gewünschten Wandstärkenprofil zu bilden, muß dem elektrohydraulischen Wandler 16 während des Arbeitszyklus ein entsprechendes Steuersignal zugeführt werden.

Aus der DT—OS 2 445 394 ist eine Verfahren bekannt, dieses Steuersignal in Form eines Polygonzugs anzunähern. Dabei wird von der Erkenntnis ausgegangen, daß sich ein Polygonzug durch Addition von sich gegenseitig überlappenden Dreiecken wählbarer Höhe erreichen läßt. In der dort beschriebenen Schaltung bedient man sich einer Widerstandsmatrix, die ein Potentiometer enthält, die in zeitlicher Folge mit Spannungsdreiecken beschickt werden. Jeweils zwei in der vorgegebenen Reihe benachbarte Potentiometer erhalten um eine halbe Dreiecksbreite sich überlappende Dreiecksspannungen gleicher Amplitude. Die für den zu erzeugenden Polygonzug erforderliche Dreieckshöhe wird am Mittelabgriff des Potentiometers abgenommen.

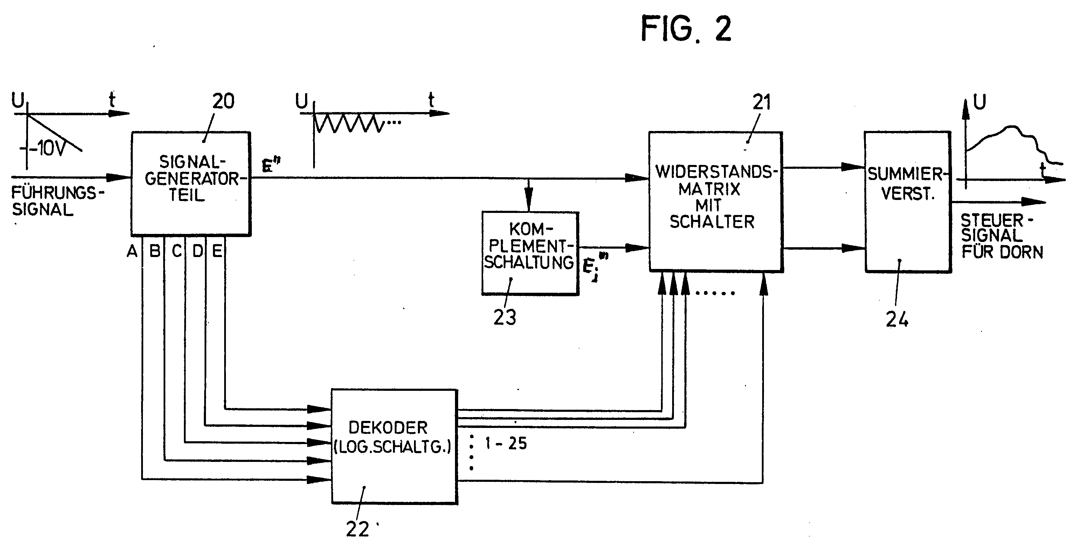

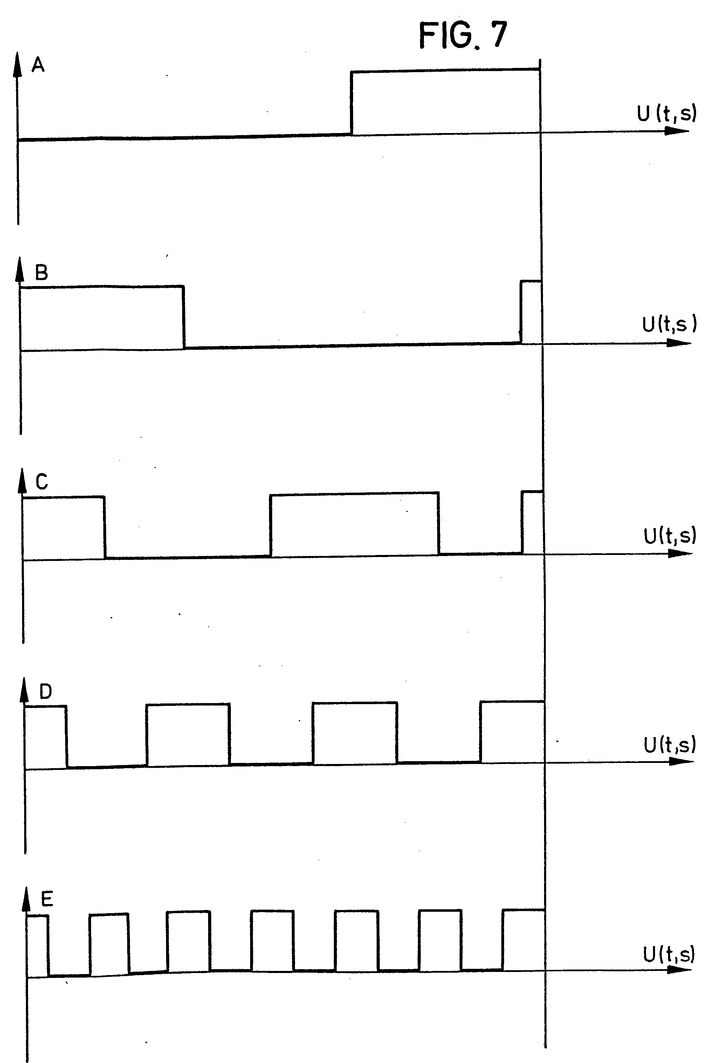

Die anhand der Fig. 2—12 nachstehend beschriebene Schaltung dient dazu, das erforderliche Steuersignal für die Bewegung des Dorns 2 zu erzeugen. Diese Steuerschaltung erhält als Eingangssignal ein Führungssignal, das entweder unmittelbar vom Positionsmeßumformer 14 kommt oder von diesem abgeleitet ist. Es besteht auch die Möglichkeit, dieses Führungssignal in einem separaten Signalgenerator zu erzeugen, wenn dieser Signalgenerator mit der Bewegung des Kolbens 12 zeitlich synchronisiert ist. Bei Maschinen, bei denen das Material unmittelbar durch die sich drehende Extruderschnecke ausgeschoben wird und deshalb kein Speicher (Zylinder 11 mit Kolben 12) und somit auch kein Positionsmeßumformer vorhanden ist, kann dieses Führungssignal ebenfalls mit einem separaten Signalgenerator erzeugt werden. Üblicherweise handelt es sich bei diesem Führungssignal um ein zeitlich ansteigendes oder abfallendes Signal, also eine Rampenfunktion. Das Ausgangssignal der Steuereinrichtung wird dem elektro-hydraulischen Wandler 16 zugeführt.

Das in Fig. 2 dargestellte Ausführungsbeispiel der Steuereinrichtung enthält einen Signalgeneratorteil 20, dem unmittelbar das Führungssignal zugeführt wird. Ein Ausgang des Signalgeneratorteils 20 ist an einen Schaltungsteil 21 angeschlossen, der eine Widerstandsmatrix und mit der Widerstandsmatrix verbundene Schalter enthält. An weitere fünf Ausgänge A—E des Signalgeneratorteils 20 ist ein Dekoder 22 angeschlossen, dessen Ausgangsleitungen mit dem Schaltungsteil 21 verbunden sind. Eine Komplementschaltung 23 ist zwischen die unmittelbar mit dem Schaltungsteil 21 verbundene Ausgangsleitung des Signalgeneratorteils 20 und einen weiteren Eingang dieses Schaltungsteils 21 geschaltet. An die beiden Ausgangsleitungen des Schaltungsteils 21 ist eine Summierverstärker 24 angeschlossen, der ausgangsseitig das Steuersignal für den Dorn 2 liefert.

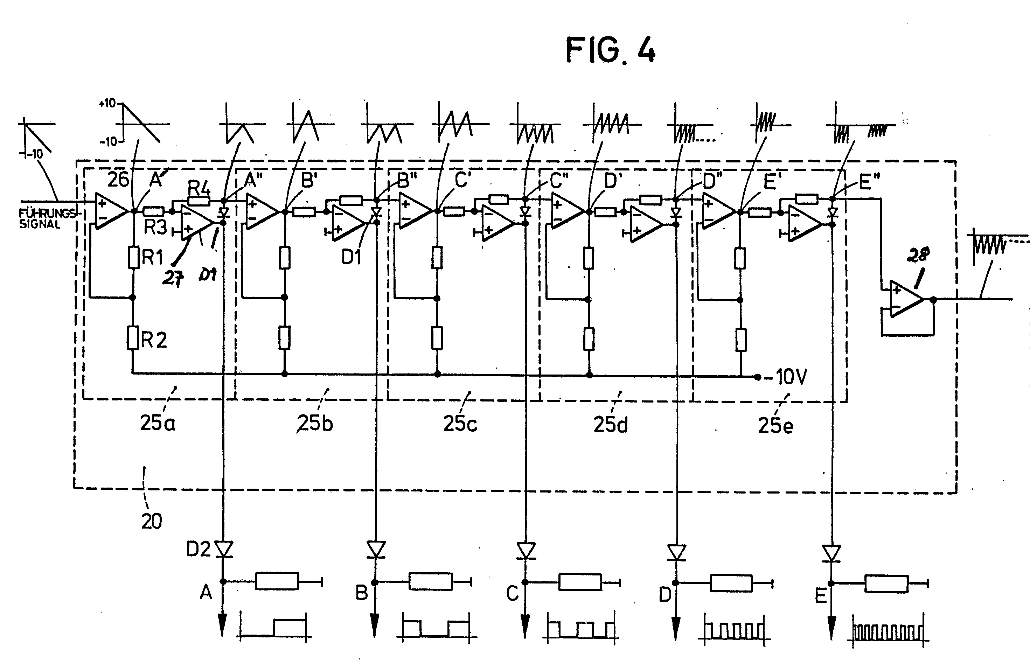

Der Signalgeneratorteil 20 ist ausführlicher in Fig. 4 dargestellt. Er besteht aus der Kettenschaltung von fünf identisch aufgebauten Signalumformern 25a-25e. Jeder derartige Signalumformer 25 enthält einen ersten Operationsverstärker 26, dessen nichtinvertierender Eingang als Signaleingang dient. An den Ausgang dieses Operationsverstärkers 26 ist ein aus zwei Widerständen R1 und R2 bestehender Spannungsteiler anschlossen, der mit seinem anderen Anschluß an einer Gleichspannung von −10 V liegt. Der Mittelabgriff dieses Spannungsteilers R1, R2 ist mit dem invertierenden Eingang des Operationsverstärkers 26 verbunden. Der Ausgang dieses Operationsverstärkers 26 ist über einen Widerstand R3 mit dem invertierenden Eingang eines zweiten Operationsverstärkers 27 verbunden. Der nichtinvertierende Eingang dieses Operationsverstärkers 27 liegt an Masse (0 Volt). Der Ausgang dieses Operationsverstärkers 27 ist über eine Diode D1 und einen Widerstand R4 mit dem invertierenden Eingang dieses Operationsverstärkers 27 verbunden. Die Kathode der Diode D1 liegt dabei am Ausgang des Operationsverstärkers 27. Die einzelnen Signalumformer 25 sind jeweils mit dem nichtinvertierenden Eingang des Operationsverstärkers 26 an den gemeinsamen Verbindungspunkt zwischen der Diode D1 und den Widerstand R4 des vorhergehenden Signalumformers 25 angeschlossen. Das Ausgangssignal des in der Kette letzten Signalumformers 25 wird über einen, einen Operationsverstärker enthaltenden Impedanzwandler 28 geführt, dessen Ausgangsanschluß der eigentliche Signalausgangsanschluß des Signalgeneratorteils 20 ist. Der Signalgeneratorteil 20 weist weitere fünf Ausgänge auf, die von den Ausgängen der Operationsverstärker 27 aus den einzelnen Signalumformerstufen 25 über jeweils eine Diode D2 nach außen geführt sind. Die auf diesen Ausgängen erscheinenden Signale sind mit den Buchstaben A, B, C, D und E bezeichnet. Diese Signale werden dem Dekoder 22 zugeführt.

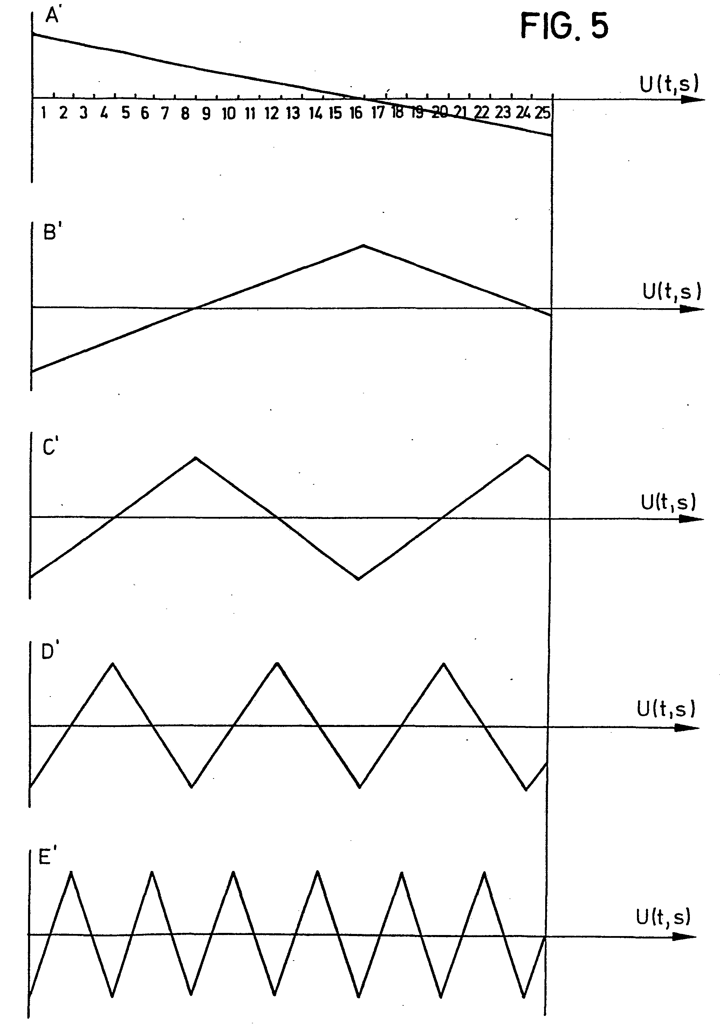

Um das Verständnis des Signalgeneratorteils 20 zu erleichtern, sind in den Figuren 5 bis 7 Signalverläufe A—E, A'—E' und A"—E" dargestellt. Die Signale A—E treten an den Kathoden der Dioden D2 auf. Die Signale A'—E' treten an den Ausgängen der Operationsverstärker 26 der einzelnen Signalumformer 25 auf, während die Signale A"—E" an den Anoden der einzelnen Dioden D1 entstehen.

Der den Operationsverstärker 26 bildende Schaltungsteil dient im wesentlichen zur Pegelverschiebung und Pegelsymmetrierung des Eingangssignals. Um in der gesamten Kette Signale mit möglichst gleicher Amplitude zu erzielen, ist es vorteilhaft, den Verstärkungsfaktor dieses Schaltungsteils mit V = 2 zu wählen. Der den Operationsverstärker 27 enthaltende Schaltungsteils wirkt als Vollweggleichrichter. Die Funktion dieser beiden Schaltungsteile wird im folgenden anhand des in der Kette ersten Signalumformers 25a näher erläutert.

Der Operationsverstärker 26 bildet aufgrund seiner beschaltung aus dem von 0 bis −10 V gehenden Führungssignal an seinem Ausgang A' ein von +10V − −10V gehendes Signal. Dieses Signal wird dem mit Operationsverstärker 27 zugeführt, der an der Anode der Diode 31 das gleichgerichtete Signal von A' bildet, das mit A" bezeichnet ist. An der Kathode der Diode D2 wird eine positive Spannung A erzeugt, wenn das Signal A' negativ ist. Solange A' positiv ist, ist die Diode D1 leitend und der Verstärker invertiert das Signal A'. Die Durchlaßspannung der Diode D1 hat keinen Einfluß auf die Invertierung, da der Verstärker mit dem Signal A" gegengekoppelt wird. Da die Ausgangsspannung des Operationsverstärkers 27 negativ ist, sperrt die Diode D2 und die Spannung A wird über den an der Kathode der Diode D2 liegenden Widerstand Null. Wird die Spannung A' negativ, dann sperrt die Diode D1 und die Signale A', A" sind identisch. Da der Ausgang des Operationsverstärkers 27 jetzt positiv ist, ist die Diode D2 leitend und die Spannung A ist ebenfalls positiv.

Mit der beschriebenen Schaltung kann aus einer Rampenspannung eine Dreiecksspannung erzeugt werden. Werden nun mehrere solche Signalumformer 25 hintereinander geschaltet, so verdoppelt sich die Anzahl der Dreiecke mit jeder zusätzlichen Schaltung. Bei einer Hintereinanderschaltung von n Schaltungen lassen sich aus einer Rampenspannung $2^{n-1}$ Dreiecke erzeugen. Ebenso nimmt die Zahl der Spannungssprünge der Digitalsignale A—E zu. Die in den Figuren 5—7 dargestellen Diagramme geben jeweils einen ganzen Arbeitszyklus wieder.

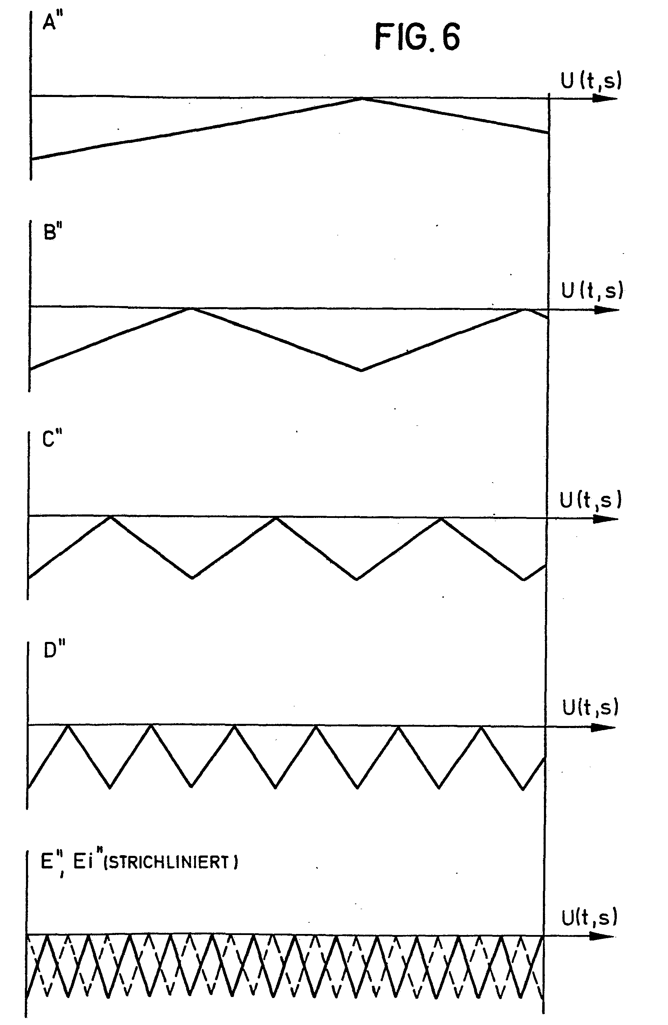

Am Ausgang des Signalgeneratorteils 20 erscheint das Signal E". Dieses Signal E" wird im Ausführungsbeispiel nach Fig. 2 dem Schaltungsteil 21 und der Komplementschaltung 23 zugeführt. Das mit der Komplementschaltung 23 erhaltene Signal Ei" ist in Fig. 6 ganz unten gezeigt. Das Signal Ei" ist gegenüber dem Signal E" um eine halbe Dreiecksbreite phasenverschoben.

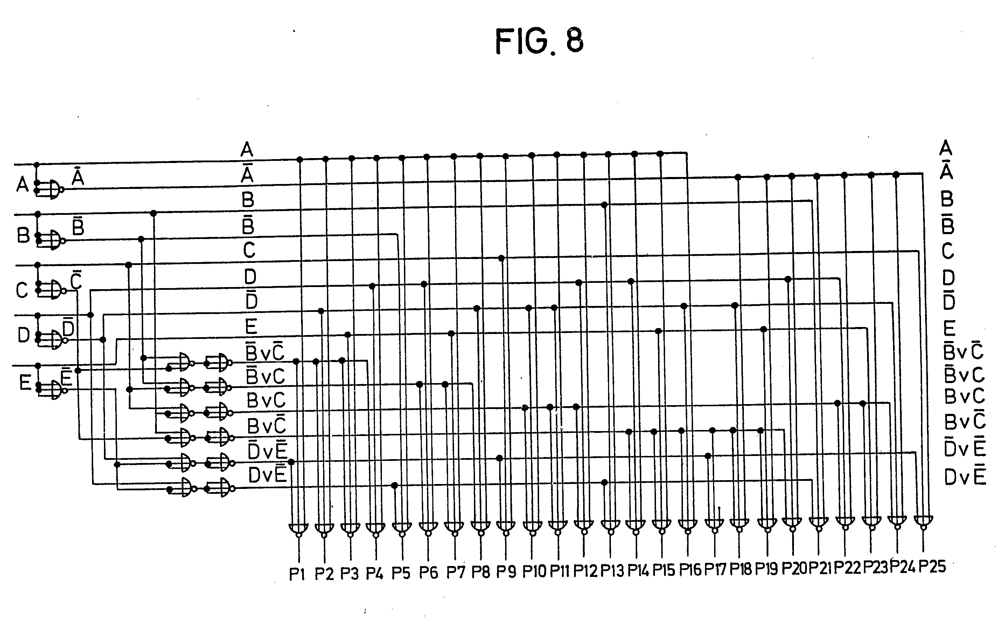

Der Dekoder 22 ist im einzelnen in Fig. 8 dargestellt. Er besteht aus einer logischen Schaltung, der eingangsseitig die Signale A—E zugeführt werden und die ausgangsseitig an den

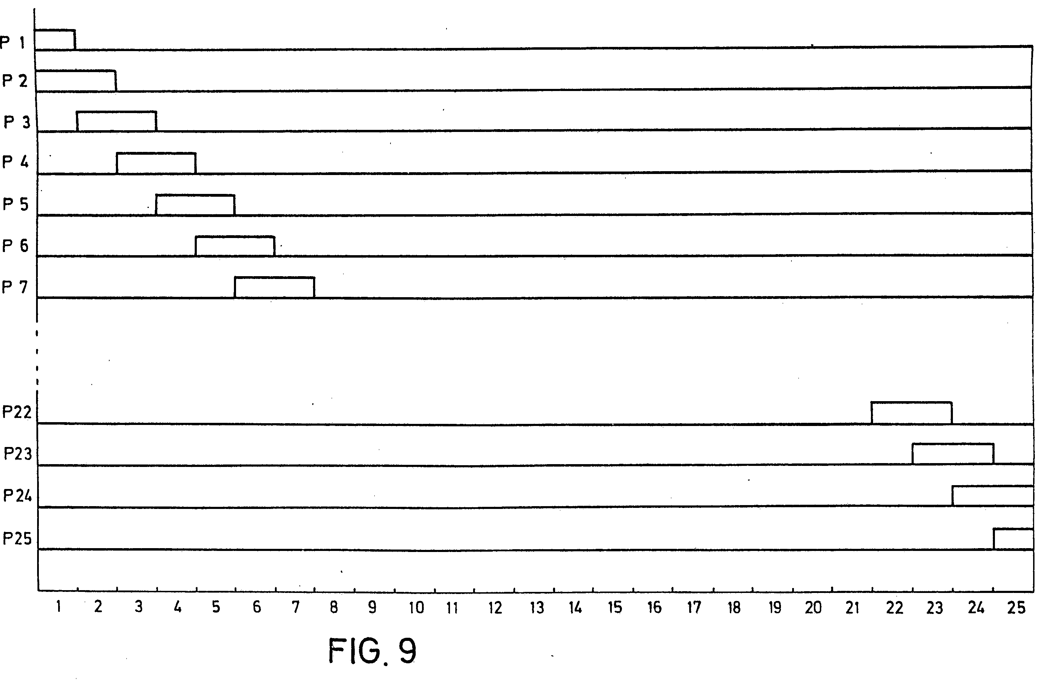

Ausgängen P1—P25 entsprechend dekodierte Signale liefert. Der Zusammenhang zwischen den Eingangssignalen A—E und den Ausgangssignalen P1—P25 wird anhand der der Beschreibung folgenden Tabellen I und II erläutert. Fig. 9 zeigt das zugehörige Spannungs-Zeitdiagramm bzw. Spannungs-Wegdiagramm bei Maschinen mit Positionsmeßumformer dieser Ausgangssignale P1—P25 über einen Zyklus. Wie aus den beiden Tabellen und Fig. 9 ersichtlich ist, wird eine Zykluszeit unterteilt in 25 gleich große Zeitabschnitte. An den Ausgängen P1—P25 des Dekoders 22 erscheinen nacheinander Impulse, die sich mit Ausnahme des ersten Signals P1 und des letzten Signals P25 über jeweils zwei Zeitabschnitte erstrecken. An benachbarten Ausgängen überlappen sich die Impulse jeweils über einen Zeitabschnitt. Beispielsweise gibt der Ausgang P5 in den Zeitabschnitten 4 und 5 einen Impuls ab. Der benachbarte Ausgang P4 gibt außer im Zeitabschnitt 3 auch im Zeitabschnitt 4 einen Impuls ab und der Ausgang P6 gibt außer im Zeitabschnitt 6 auch im Zeitabschnitt 5 einen Impuls ab.

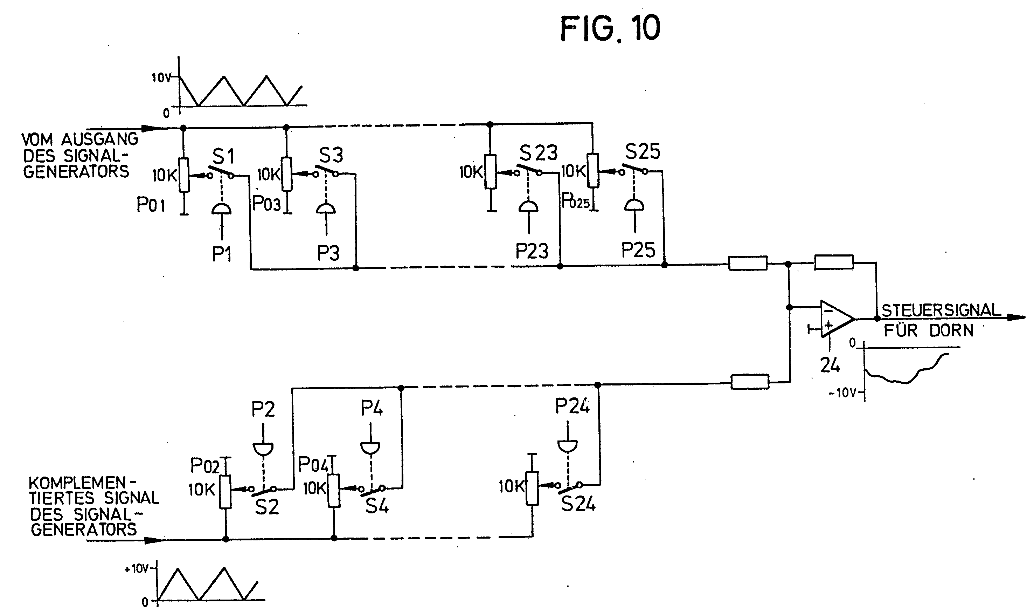

Um den oben angesprochenen Polygonzug zu erhalten, müssen die einzelnen Potentiometer der Widerstandsmatrix in den einzelnen Zeitabschnitten mit den Dreieckspannungen versorgt werden. Dabei darf nur jeweils eine absteigende Flanke mit einer aufsteigenden Flanke des nächstfolgenden Dreiecks addiert werden. In der oben angesprochenen Offenlegungsschrift wird dies dadurch erreicht, daß die jedem Potentiometer zugeordneten Dreiecksgeneratoren nacheinander gesteuert werden, so daß nur jeweils benachbarte Potentiometer Signal erhalten. Bei der vorliegenden Schaltung erhalten jedoch alle Potentiometer ständig Eingangssignale zugeführt. Wie Fig. 10 zeigt, werden die Potentiometer Po1, Po3—Po25 (alle ungeradzahligen) unmittelbar mit dem Ausgangssignal des Signalgenerators 20 gespeist, während die Potentiometer Po2, Po4—Po24 (alle geradzahligen) an den Ausgang der Komplementschaltung 23 angeschlossen sind. Die ungeradzahligen Potentiometer erhalten also das in Fig. 6 gezeigte Signal E″, während den geradzahligen Potentiometern das Signal Ei″ zugeführt wird. An die Mittelabgriffe der Potentiometer ist jeweils ein steuerbarer Schalter S1—S25 angeschlossen. Diese Schalter S1—S25 werden gesteuert durch die Signale P1—P25 von Dekoder 22. Diese Schalter sind in den Zeiten, in denen die Signale P1—P25 Null sind, geöffnet und in den Impulszeiten geschlossen. Alle Schalter S1—S25 sind mit den Eingängen eines Summierverstärkers 30 verbunden. Die angegebene Steuerung dieser Schalter bewirkt, daß nur jeweils ein geradzahliges Potentiometer und daß ihm unmittelbar benachbarte ungeradzahlige Potentiometer an den Summierverstärker 30 angeschlossen ist. Es ist nicht zwingend erforderlich, die Schalter S1—S25 zwischen dem Summierverstärker 30 und den Mittelabgriffen der Potentiometer anzuordnen. Mann erhält das gleiche Ergebnis, wenn alle Mittelabgriffe an den Summierverstärker 30 angeschlossen sind und die Schalter sich in den Zuführleitungen der einzelnen Potentiometer befinden.

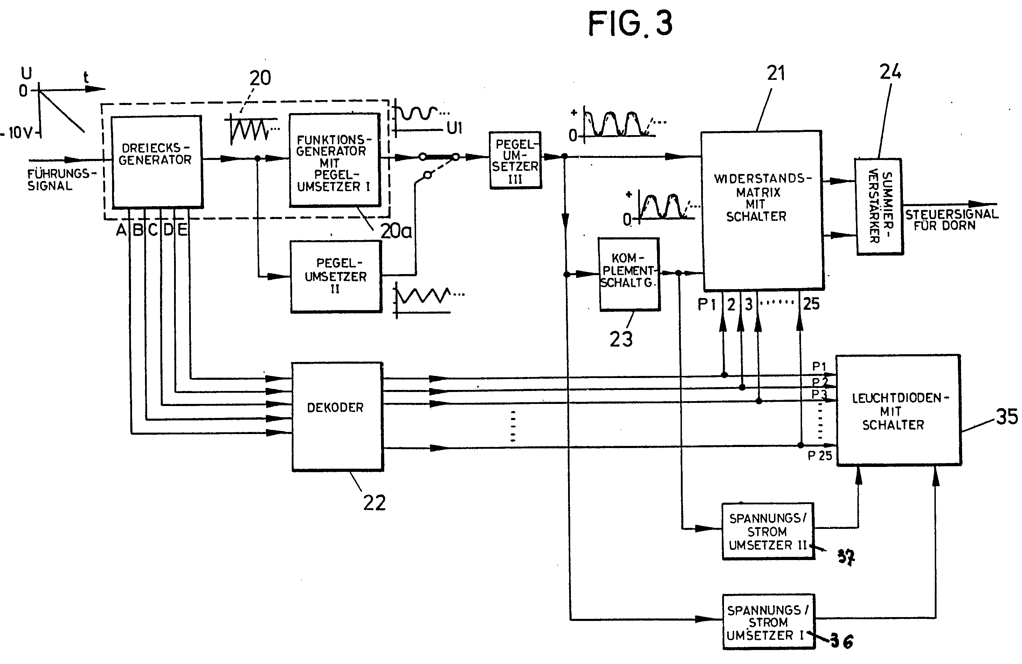

Das Ausführungsbeispiel nach Fig. 3 unterscheidet sich von dem Ausführungsbeispiel nach Fig. 2 in zwei Punkten. Der Signalgenerator 20 dieses Ausführungsbeispiels nach Fig. 3 enthält zusätzlich einen Funktionsgenerator 20a, der zur Abrundung der Spannungsdreiecke dient. Es kann beizpielsweise hierzu der integrierte Schaltkreis ICL 8038 Verwendung finden. Dieser enthält u.a. einen statischen Sinuswandler, der eine Dreieckspannung in eine sinusförmige Spannung umwandelt. Die Verwendung eines solchen Funktionsgenerator 20a bewirkt, daß zwei aufeinanderfolgende Punkt nicht durch eine gerade Linie (Linearinterpolation) miteinander verbunden werden, sondern durch einen gerundeten Kurvenzug. Bei bestimmten Materialien, z.B. Polyvinylchlorid für den Vorformling können sich u.U. die Ecken des Führungssignals nachteilig auf die Artikelqualität auswirken. Die sinusförmige Ausgangsspannung des Funktionsgenerators wird mit dem Pegelumsetzer III so verschoben, daß ihre Amplitude von Null nach +1 geht, so daß im Prinzip eine sinusquadratförmige Spannung entsteht.

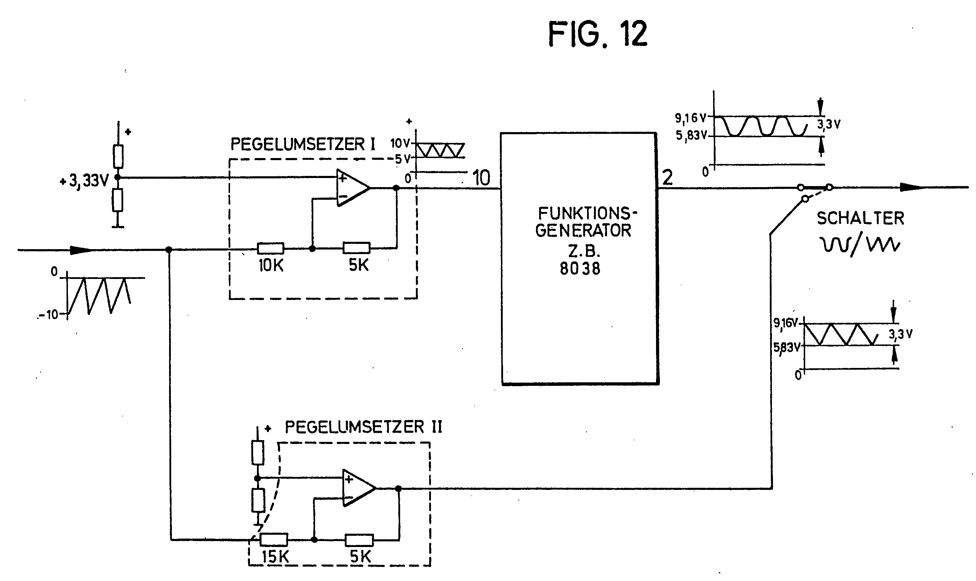

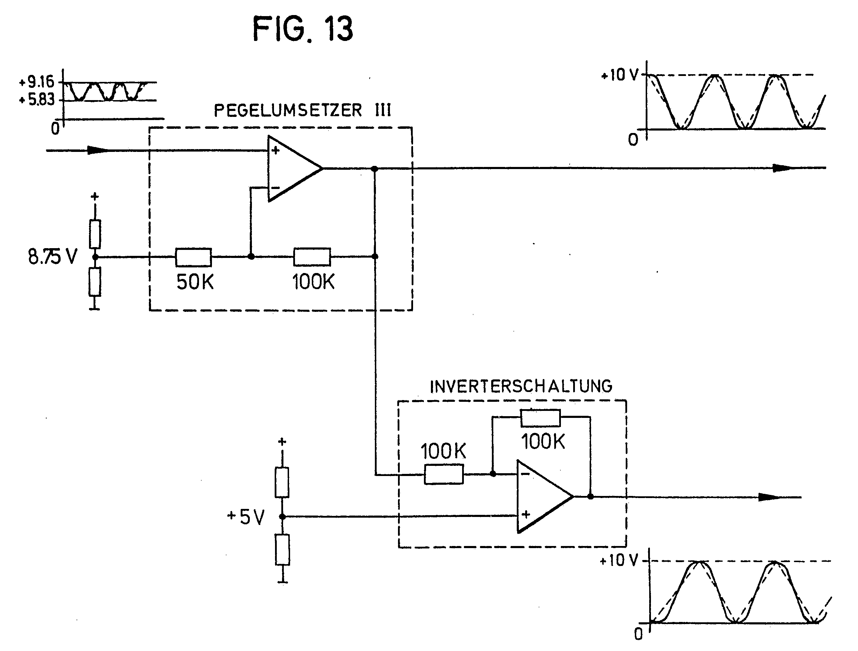

Im Beispiel gemäß Fig. 3 entsteht am Ausgang des Pegelumsetzers III eine Cosinusquadrat-Spannung. Am Ausgang der Komplementschaltung entsteht durch Komplementbildung eine Sinusquadratspannung $(1-\cos^2 x = \sin^2 x)$. Stehen also die Mittelabgriffe benachbarter Potentiometer auf gleichem Niveau, ergibt die Addition der einzelnen Funktionsabschnitte eine Konstante, da die Addition aus Cosinusquadrat x und Sinusquadrat x stets 1 ergibt. Um von Dreiecksbetrieb auf den Betrieb mit Funktionsgenerator umschalten zu können, ist im Ausführungsbeispiel nach Fig. 3 ein Umschalter U1 vorgesehen. Die Pegelumsetzer I, II und III dienen lediglich zur Spannungsanpassung. Sie sind im Detail in den Fig. 12 und 13 dargestellt.

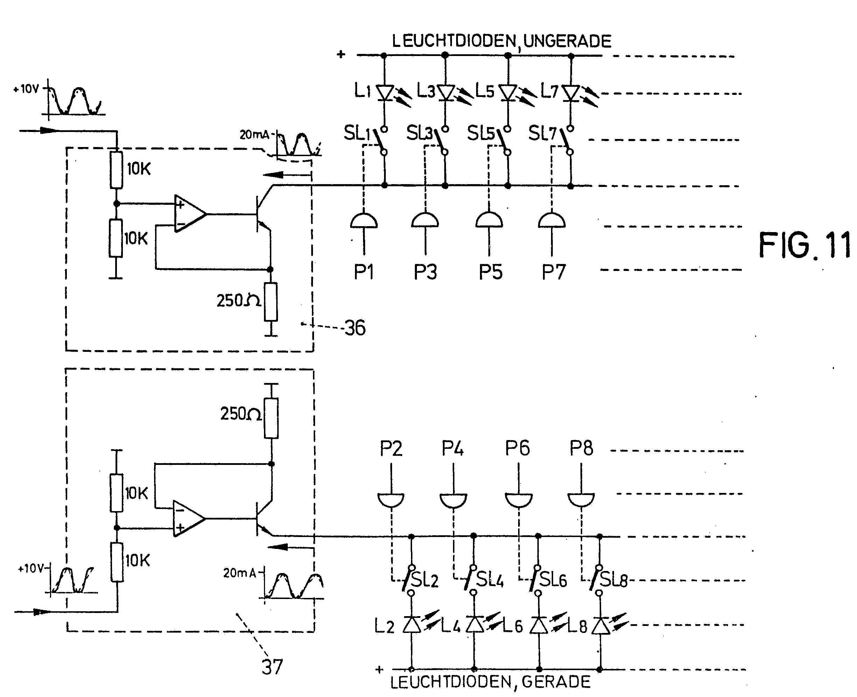

Ein weiterer Unterschied des Ausführungsbeispiels nach Fig. 3 zum Ausführungsbeispiel nach Fig. 2 besteht darin, daß eine Leuchtdiodenanzeigeschaltung 35 vorgesehen ist. Diese Leuchtdiodenanzeigeschaltung 35 erhält prinzipiell dieselben Eingangssignale wie der Schaltungsteil 21 (Widerstandsmatrix mit Schalter). Wegen des größeren Strombedarfs, weil die Lichtstärke der Leuchtdioden etwa proportional zum Durchlaßstrom ist, weil der Widerstand der Leuchtdioden nicht konstant ist, und damit sich der unterschiedliche Durchlaßwiderstand der Schalter SL1—25 nicht auf den Strom durch die Leuchtdioden und somit auf die Lichtstärke auswirkt, werden jedoch die Leuchtdioden durch einen eingeprägten Strom (z.B. Sinus oder Dreieck) angesteuert. Die Pegelumsetzer 36 und 37, die im Detail aus Fig. 11 ersichtlich sind, wandeln die Dreick- bzw. Sinuseingangsspannungen der Widerstandsmatrix 21 in proportionale Ströme für die Leuchtdioden um. Die Leuchtdioden L1—L25 werden über Schalter SL1—25, die an die Ausgänge P1—P25 des Dekoders 22 angeschlossen sind, angesteuert. Die Leuchtdioden L1—L25 erhalten also immer dann einen Strom, wenn der Mittelabgriff des zugehörigen Potentiometers Po1—Po25 an den Summierverstärker 24 angeschaltet ist. Damit entsteht eine optische Darstellung des Programmablaufes, wenn man die Leuchtdioden in ihrer Reihenfolge nebeneinander anordnet. Vorteilhafterweise wird man auf einer Konsole oder dergl. die Einstellorgane der Potentiometer den leuchtdioden örtlich zuordnen. Ein weiterer Vorteil der Lumineszenzdiodenansteuerung besteht darin, daß ein scheichender Übergang der Anzeige entsteht. Während eine Lumineszenzdiode langsam dunkler wird, wird die benachbarte langsam heller. Der Gesamtstrom durch beide Leuchtdioden ist konstant.

TABELLE I

| | A | B | C | D | E | P1 | 2 | 3 | 4 | 5 | 6 | 7 | 8 | 9 | 10 | 11 | 12 | 13 | 14 | 15p | 16 |
|---|---|---|---|---|---|---|---|---|---|---|---|---|---|---|---|---|---|---|---|---|---|
| 1 | 0 | 1 | 1 | 1 | 1 | 1 | 1 | 0 | 0 | 0 | 0 | 0 | 0 | 0 | 0 | 0 | 0 | 0 | 0 | 0 | 0 |
| 2 | 0 | 1 | 1 | 1 | 0 | 0 | 1 | 1 | 0 | 0 | 0 | 0 | 0 | 0 | 0 | 0 | 0 | 0 | 0 | 0 | 0 |
| 3 | 0 | 1 | 1 | 0 | 0 | 0 | 0 | 1 | 1 | 0 | 0 | 0 | 0 | 0 | 0 | 0 | 0 | 0 | 0 | 0 | 0 |
| 4 | 0 | 1 | 1 | 0 | 1 | 0 | 0 | 0 | 1 | 1 | 0 | 0 | 0 | 0 | 0 | 0 | 0 | 0 | 0 | 0 | 0 |
| 5 | 0 | 1 | 0 | 0 | 1 | 0 | 0 | 0 | 0 | 1 | 1 | 0 | 0 | 0 | 0 | 0 | 0 | 0 | 0 | 0 | 0 |
| 6 | 0 | 1 | 0 | 0 | 0 | 0 | 0 | 0 | 0 | 0 | 1 | 1 | 0 | 0 | 0 | 0 | 0 | 0 | 0 | 0 | 0 |
| 7 | 0 | 1 | 0 | 1 | 0 | 0 | 0 | 0 | 0 | 0 | 0 | 1 | 1 | 0 | 0 | 0 | 0 | 0 | 0 | 0 | 0 |
| 8 | 0 | 1 | 0 | 1 | 1 | 0 | 0 | 0 | 0 | 0 | 0 | 0 | 1 | 1 | 0 | 0 | 0 | 0 | 0 | 0 | 0 |
| 9 | 0 | 0 | 0 | 1 | 1 | 0 | 0 | 0 | 0 | 0 | 0 | 0 | 0 | 1 | 1 | 0 | 0 | 0 | 0 | 0 | 0 |
| 10 | 0 | 0 | 0 | 1 | 0 | 0 | 0 | 0 | 0 | 0 | 0 | 0 | 0 | 0 | 1 | 1 | 0 | 0 | 0 | 0 | 0 |
| 11 | 0 | 0 | 0 | 0 | 0 | 0 | 0 | 0 | 0 | 0 | 0 | 0 | 0 | 0 | 0 | 1 | 1 | 0 | 0 | 0 | 0 |
| 12 | 0 | 0 | 0 | 0 | 1 | 0 | 0 | 0 | 0 | 0 | 0 | 0 | 0 | 0 | 0 | 0 | 1 | 1 | 0 | 0 | 0 |
| 13 | 0 | 0 | 1 | 0 | 1 | 0 | 0 | 0 | 0 | 0 | 0 | 0 | 0 | 0 | 0 | 0 | 0 | 1 | 1 | 0 | 0 |
| 14 | 0 | 0 | 1 | 0 | 0 | 0 | 0 | 0 | 0 | 0 | 0 | 0 | 0 | 0 | 0 | 0 | 0 | 0 | 1 | 1 | 0 |
| 15 | 0 | 0 | 1 | 1 | 0 | 0 | 0 | 0 | 0 | 0 | 0 | 0 | 0 | 0 | 0 | 0 | 0 | 0 | 0 | 1 | 1 |
| 16 | 0 | 0 | 1 | 1 | 1 | 0 | 0 | 0 | 0 | 0 | 0 | 0 | 0 | 0 | 0 | 0 | 0 | 0 | 0 | 0 | 1 |

TABELLE II

| | A | B | C | D | E | P17 | 18 | 19 | 20 | 21 | 22 | 23 | 24 | P25 |
|---|---|---|---|---|---|---|---|---|---|---|---|---|---|---|
| 15 | 0 | 0 | 1 | 1 | 0 | 0 | 0 | 0 | 0 | 0 | 0 | 0 | 0 | 0 |
| 16 | 0 | 0 | 1 | 1 | 1 | 1 | 0 | 0 | 0 | 0 | 0 | 0 | 0 | 0 |
| 17 | 1 | 0 | 1 | 1 | 1 | 1 | 1 | 0 | 0 | 0 | 0 | 0 | 0 | 0 |
| 18 | 1 | 0 | 1 | 1 | 0 | 0 | 1 | 1 | 0 | 0 | 0 | 0 | 0 | 0 |
| 19 | 1 | 0 | 1 | 0 | 0 | 0 | 0 | 1 | 1 | 0 | 0 | 0 | 0 | 0 |
| 20 | 1 | 0 | 1 | 0 | 1 | 0 | 0 | 0 | 1 | 1 | 0 | 0 | 0 | 0 |
| 21 | 1 | 0 | 0 | 0 | 1 | 0 | 0 | 0 | 0 | 1 | 1 | 0 | 0 | 0 |
| 22 | 1 | 0 | 0 | 0 | 0 | 0 | 0 | 0 | 0 | 0 | 1 | 1 | 0 | 0 |
| 23 | 1 | 0 | 0 | 1 | 0 | 0 | 0 | 0 | 0 | 0 | 0 | 1 | 1 | 0 |
| 24 | 1 | 0 | 0 | 1 | 1 | 0 | 0 | 0 | 0 | 0 | 0 | 0 | 1 | 1 |
| 25 | 1 | 1 | 0 | 1 | 1 | 0 | 0 | 0 | 0 | 0 | 0 | 0 | 0 | 1 |

**Patentansprüche**

1. Elektrische Steuereinrichtung zum Erzeugen eines Steuersignals für die Bewegung des Dorns (2) eines Extruders, mit einem Signalgeneratorteil (20), der an seinen Ausgangsanschlüssen aus einem ihm eingangsseitig zugeführten Führungssignal zeitlich aufeinanderfolgende und sich gleichmäßig überlappende Spannungsverläufe, beispielsweise Spannungsdreiecke, erzeugt, einer mehrere Potentiometer (Po$_i$) enthaltenden Widerstandsmatrix (21), deren Potentiometer in einer vorgegebenen Reihenfolge zeitlich nacheinander mit den Spannungsverläufen beschickt werden, und einem mit den Mittelabgriffen der Potentiometer in Verbindung stehenden Summierverstärker (24), dessen Ausgang das Steuersignal für die Bewegung des Dorns liefert, dadurch gekennzeichnet, daß der Signalgeneratorteil (20) einen für alle Potentiometer (Po1—Po25) gemeinsamen Signalgenerator aufweist, der aus dem Führungssignal eine kontinuierliche Folge von Spannungsverläufen an seinem Ausgang bildet, daß an den Ausgang des Signalgenerators eine Komplementschaltung (23) angeschlossen ist, daß jedem Potentiometer der Widerstandsmatrix (21) ein steuerbarer Schalter (S1—S25) zugeordnet ist, daß in der vorgegebenen Riehenfolge aufeinanderfolgende Einheiten, bestehend aus Potentiometer (Po) und Schalter (S), jeweils abwechselnd das Ausgangssignal des Signalgenerators und der Komplementschaltung zugeführt ist, und daß die Schalter in Abhängigkeit vom Führungssignal derart gesteuert sind, daß die Schalter in der vorgegebenen Reihenfolge nacheinander jeweils paarweise leitend sind, um das Ausgangssignal von jeweils nur zwei in der Reihenfolge benachbarten Potentiometern an den Summierverstärker (24) zu liefern.

2. Steuereinrichtung nach Anspruch 1, dadurch gekennzeichnet, daß der Signalgenerator (20) aus der Kettenschaltung von mehreren Einheiten (25a—25e) aufgebaut ist, die eine Pegelsymmetrierschaltung (26) und eine daran angeschlossene Vollweggleichrichterschaltung (27) umfassen.

3. Steuereinrichtung nach Anspruch 2, dadurch gekennzeichnet, daß die Pegelsymmetrierschaltung eine Operationsverstärker (26) aufweist, dessen Ausgang über einen Spannungsteiler (R1, R2) an Gleichspannung liegt und dessen invertierender Eingang mit dem Mittelabgriff des Spannungsteilers verbunden ist.

4. Steuereinrichtung nach Anspruch 2 oder 3, dadurch gekennzeichnet, daß die Vollweggleichrichterschaltung einen Operationsverstärker (27) aufweist, dessen Ausgang über eine Diode (D1) und einen Widerstand (R4) auf den Steuereingang rückgekoppelt ist, und daß das Ausgangssignal für die nächste Einheit von dem gemeinsamen Anschlußpunkt zwischen Diode und Widerstand abgegriffen wird.

5. Steuereinrichtung wenigstens nach Anspruch 2, dadurch gekennzeichnet, daß an die Ausgänge der Einheiten (25a—25e) ein Dekoder (22) angeschlossen ist, der die Steuersignale für die den Potentiometern (Po1—Po25) zugeordneten Schalter (S1—S25) liefert.

6. Steuereinrichtung nach einem der Ansprüche 1—5, gekennzeichnet durch, optische Anzeigeelement (L1—L25), mit denen die jeweils angesteuerten Schalter (S1—S25) und die jeweils eingeschalteten Potentiometer (Po1—Po25) entsprechend ihrer jeweiligen Wertigkeit am Steuersignal für den Dorn anzeigbar sind.

7. Steuereinrichtung nach Anspruch 5 und 6, dadurch gekennzeichnet, daß die Anzeigeelemente (L1—L25) von dem Dekoder (22) und von den sich kontinuierlich ändernden Signalverläufen des Signalgeneratorteils (20) und der Komplementschaltung (23) angesteuert sind.

8. Steuereinrichtung nach Anspruch 6 oder 7, dadurch gekennzeichnet, daß die Anzeigeelemente als Lumineszenzdioden (L1—L25) ausgebildet sind.

9. Steuereinrichtung nach einem der Ansprüche 1—8, dadurch gekennzeichnet, daß der Signalgenerator (20) Signalverläufe in Form von Sinuswellen oder Sinusquadrat-Wellen erzeugt.

10. Steuereinrichtung nach Anspruch 9, dadurch gekennzeichnet, daß der Signalgenerator (20) einen Funktionsgenerator (20a) enthält, der die Wellen aus Dreieckspannungen erzeugt.

11. Steuereinrichtung nach Anspruch 1, dadurch gekennzeichnet, daß die mehrere Potentiometer enthaltende Widerstandsmatrix auch aus jedem anderen einstellbaren Spannungsteiler aufgebaut werden kann.

12. Steuereinrichtung nach Anspruch 1 bis 4, dadurch gekennzeichnet, daß der Signalgeneratorteil (20) als statischer Analog/Digital-Wandler verwendet werden kann.

## Revendications

1. Dispositif de commande électrique en vue de la génération d'un signal de commande pour le déplacement du mandrin (2) d'une boudineuse, équipé d'un générateur de signaux (20), qui engendre à ses bornes de sorties, à partir d'un signal de guidage appliqué à son entrée, des formes d'onde de tension se succédant temporellement et se recouvrant régulièrement, par exemple des impulsions triangulaires de tension, d'une matrice de résistance (21) contenant plusieurs potentiomètres (Po$_i$), dont les potentiomètres sont alimentés, selon une succession prédéterminée temporellement les uns après les autres, par les formes d'onde de tension, et d'un amplificateur de sommation (24) se trouvant en communication avec les prises médianes des potentiomètres, dont la sortie délivre le signal de commande pour le mouvement du mandrin, caractérisé en ce que le générateur de signaux (20) comporte un générateur de signaux commun pour tous les potentiomètres (Po1—Po25), qui forme à sa sortie, à partir du signal de guidage, une succession continue de formes d'onde de tension, en ce qu'à la sortie du générateur de signaux est raccordé un circuit complémentaire (23), en ce qu'à chaque potentiomètre de la matrice de résistances (21) est associé un interrupteur commandé (S1—S25), en ce que selon la succession prescrite d'unités successives, se composant d'un potentiomètre (Po) et d'un interrupteur (S), est appliqué en alternance le signal de sortie du générateur de signaux et le circuit complémentaire, et en ce que les interrupteurs sont commandés en fonction du signal de guidage, de telle sorte que les interrupteurs soient rendus conducteurs successivement par paires selon la succession prescrite, afin de délivrer le signal de sortie de deux potentiomètres adjacents dans la succession à l'amplificateur de sommation (24).

2. Dispositif de commande selon la revendication 1, caractérisé en ce que le générateur de signaux (20) est constitué du montage en série de plusieurs unités (25a-25e), qui comportent un circuit de symétrie de niveau (26) et un circuit redresseur à deux alternances (27) relié à celui-ci.

3. Dispositif de commande selon la revendication 2, caractérisé en ce que le circuit de symétrie de niveau comporte un amplificateur opérationnel (26), dont la sortie se trouve à une tension continue par l'intermédiaire d'un diviseur de tension (R1, R2) et dont l'entrée avec inversion est reliée à la prise médiane du diviseur de tension.

4. Dispositif de commande selon la revendication 2 ou 3, caractérisé en ce que le circuit redresseur à deux alternances comporte un amplificateur opérationnel (27), dont la sortie est reliée en rétroaction par l'intermédiaire d'une diode (D1) et d'une résistance (R4) à l'entrée de commande, et en ce que le signal de sortie pour l'unité suivante est délivré par le point de raccordement commun entre la diode et la résistance.

5. Dispositif de commande selon la revendication 2, caractérisé en ce qu'aux sorties des unités (25a-25e) est relié un décodeur (22), qui délivre les signaux de commande pour les interrupteurs (S1—S25) associés aux potentiomètres (Po1—Po25).

6. Dispositif de commande selon une des revendications 1 à 5, caractérisé par des éléments d'affichage optiques (L1—L25), à l'aide desquels les interrupteurs commandés (S1—S25) et les potentiomètres fermés (Po1—Po25) peuvent être indiqués selon leur valeur respective au signal de commande pour le mandrin.

7. Dispositif de commande selon la revendication 5 ou 6, caractérisé en ce que les éléments d'affichage (L1—L25) sont commandés par le décodeur (22) et par les formes d'onde de signaux variant continuement du générateur de signaux (20) et par le circuit complémentaire (23).

8. Dispositif de commande selon la revendication 6 ou 7, caractérisé en ce que les éléments d'affichage sont constitués par des diodes électroluminescentes (L1—L25).

9. Dispositif de commande selon une des revendications 1 à 8, caractérisé en ce que le générateur de signaux (20) engendre des formes d'onde de signaux sous la forme d'ondes sinusoïdales ou d'ondes et sinus carré.

10. Dispositif de commande selon la revendication 9, caractérisé en ce que le générateur de signaux (20) contient un générateur de fonction (20a), qui engendre les ondes à partir de tensions triangulaires.

11. Dispositif de commande selon la revendication 1, caractérisé en ce que la matrice de résistances contenant plusieurs potentiomètres peut également être constituée d'un autre diviseur de tension réglable.

12. Dispositif de commande selon une des revendications 1 à 4, caractérisé en ce que le générateur de signaux (20) peut être utilisé en tant que convertisseur analogique/numérique statique.

## Claims

1. Electrical control device for generating a control signal for the movement of the pintle of an extruder, including a signal generator portion (20) for generating at its output terminals a timed sequence of mutually uniformly overlapping voltage configurations, for instance voltage triangles, from a command signal supplied to the input thereof, an impedance matrix (21) having a plurality of potentiometers (Po$_i$) arranged to be sequentially supplied in a predetermined sequence with said voltage configurations, and a summing amplifier connected to the center tap terminals of said potentiometers and supplying at its output terminal said control signal for the movement of said pintle (2), characterized in that said signal generator portion (20) comprises a common signal generator for all of said potentiometers (Po1—Po25) operative to convert said command signal into a continuous sequence of voltage configurations at its output terminal, that a complement circuit (23) is connected to the output of said signal generator, that each potentiometer of said impedance matrix (21) has a controllable switch (S1—S25) associated therewith, that individual units each formed by a potentiometer (Po) and a switch (S) and following one another in said predetermined sequence are alternately supplied with the output signal of said signal generator and said complement circuit, and that said switches are controlled in response to said command signal in such a manner that pairs of said switches are sequentially conductive in said predetermined sequence for supplying the output signal of only two adjacent potentiometers in said sequence at any time to said summing amplifier (24).

2. A control device according to claim 2, characterized in that said signal generator (20) is formed by a chain-connection of a plurality of units (25a—25e) each including a level symmetrizing circuit (26) and a full wave rectifyer circuit (27) connected thereto.

3. A control device according to claim 2, characterized in that said level symmetrizing circuit comprises an operation amplifier (26) the output of which is connected to a DC voltage source through a voltage divider, and the inverting input of which is connected to the center terminal of the voltage divider.

4. A control device according to claim 2 or 3, characterized in that said full wave rectifier circuit comprises an operational amplifier (27) the output of which is fed back to the control input through a diode (D1) and a resistor (R4), and that the output signal for the subsequent unit is derived from the common junction between said diode and said resistor.

5. A control device according to at least claim 2, characterized in that the output terminals of said units (25a-25e) have connected thereto a decoder (22) operative to supply the control signals for said switches (S1 to S25) associated with said potentiometers (Po1—Po25).

6. A control device according to any of claims 1—5, characterized in that it includes optical display elements (L1—L25) operative to indicate the switches (S1—S25) actuated at a given time and the respective potentiometers (Po1—Po25) activated thereby with their proportional participation in said control signal for said pintle.

7. A control device according to claims 5 and 6, characterized in that said display elements (L1—L25) are activated by said decoder (22) and · by the continually varying signal configurations of the signal generator portion (20) and the complement circuit (23).

8. A control device according to claims 6 or 7, characterized in that said display elements comprise light emitting diodes (L1—L25).

9. A control device according to any of claims 1—8, characterized in that said signal generator (20) generates signal configurations in the form of sinus waves or sine-squared waves.

10. A control device according to claim 9, characterized in that said signal generator (20) includes a function generator (20a) operative to generate said wave from triangle voltages.

11. A control device according to claim 1, characterized in that said impedance matrix including said plurality of potentiometers may also be formed by any other adjustable voltage divider.

12. A control device according to claims 1 to 4, characterized in that said signal generator portion (20) may be employed as a static analog-digital converter.

# FIG. 1

POSITIONS-
MESSUMFORMER

STEUERSIGNAL

P R

# FIG. 2

FIG.3

# FIG. 4

FIG. 5

A'

1 2 3 4 5 6 7 8 9 10 11 12 13 14 15 16 17 18 19 20 21 22 23 24 25

U(t,s)

B'

U(t,s)

C'

U(t,s)

D'

U(t,s)

E'

U(t,s)

5

# FIG. 6

A"

U(t,s)

B"

U(t,s)

C"

U(t,s)

D"

U(t,s)

E", Ei"(STRICHLINIERT)

U(t,s)

0 003 110

FIG. 7

# FIG. 8

0003110

FIG.9

# FIG. 10

VOM AUSGANG DES SIGNAL-GENERATORS

10V / 0

10K P01 S1 / P1
10K P03 S3 / P3
10K S23 / P23
10K P025 S25 / P25

KOMPLEMEN-TIERTES SIGNAL DES SIGNAL-GENERATORS

P2 / P02 10K S2
P4 / P04 10K S4
P24 / 10K S24

+10V / 0

24

STEUERSIGNAL FÜR DORN

0 / -10V

FIG.11

# FIG. 12

PEGELUMSETZER I

+3,33V

10K    5K

PEGELUMSETZER II

15K    5K

FUNKTIONS-
GENERATOR
Z.B.
8038

10

2

9,16V
5,83V
3,3V

9,16V
5,83V
3,3V

SCHALTER
↧↧↧/↧↧↧

10V
5V
0

0
-10

0003110

12

FIG. 13